# EUROPEAN PATENT SPECIFICATION

(11) **EP 2 432 652 B1**
(45) Date of publication and mention of the grant of the patent: **04.04.2018**
(21) Application number: 10730506.2
(22) Date of filing: 18.05.2010
(51) Int. Cl.: B60C 11/03, B60C 11/12, B60C 11/13

(54) **TYRE FOR A MOTOR VEHICLE**
REIFEN FÜR EIN KRAFTFAHRZEUG
PNEUMATIQUE POUR UN VEHICULE AUTOMOBILE

(30) Priority: 19.05.2009 IT RM20090255; 09.09.2009 US 272294 P
(43) Date of publication of application: 28.03.2012
(73) Proprietor: Pirelli Tyre S.p.A., 20126 Milano (IT)
(72) Inventor: COLOMBO, Gianfranco, I-20126 Milano (IT); MONTESELLO, Stefano, I-20126 Milano (IT); SANGALLI, Roberto, I-20126 Milano (IT); BOIOCCHI, Maurizio, I-20126 Milano (IT)
(74) Representative: Fabiano, Piero
(86) International application number: PCT/IB2010/001144
(87) International publication number: WO 2010/133940

(56) References cited:
- EP-A- 0 773 117
- EP-A- 0 846 577
- EP-A- 1 123 819
- EP-A- 1 630 004
- WO-A-01/02194
- DE-U1- 9 016 455
- JP-A- 2 045 203
- JP-A- 60 151 104
- US-A- 4 815 512

## Description

The present invention relates to a tyre for a motor vehicle. In particular, a winter tyre for motor vehicles having medium engine capacity, for example 1000-2000 cm³.

By winter tyre it is meant a tyre provided with a tread suitable for running on surfaces characterized by reduced compactness, in particular snow-covered roadways.

Tyres of this type are usually required to have, besides excellent behavioural features on snow, also performances on wet and dry surfaces similar to or only slightly lower than summer tyres.

Tyres of this category are further required to have, together with excellent traction, braking and handling features on snow-covered roadways, also good traction/braking and handling features on dry and wet surfaces, and a satisfactory resistance to wear.

The aforementioned features can be determined by forming in the tread band appropriate transverse and circumferential grooves suitably sized and oriented.

The intersection of said grooves gives rise to the creation of blocks shaped according to various forms, suitably designed, and arranged in circumferential rows disposed in a side by side relationship.

The circumferential grooves can affect the features of directionality and running stability of the tyre in relation to lateral (drift) thrusts, which are directed parallel to the rotation axis of the tyre.

The transverse grooves can, in turn, affect the traction features of the tyre, i.e. the ability of transmitting to the road surface the tangential thrusts parallel to the driving direction, during acceleration and braking of the motor vehicle.
The circumferential and transversal grooves can also affect the water drainage in the contact area with the road surface (footprint area) while running on a wet road surface.
In addition, winter tyres are characterized by the presence of a tight siping. The sipes are small grooves or cuts, particularly narrow compared with the remaining grooves, which allow snow to be trapped and retained, thus achieving greater grip of the tyre on snow, since friction of snow against snow is greater than friction of rubber against snow.
EP0968847 describes a tyre for use under winter conditions with a tread band which is divided by transverse and circumferential grooves into profile elements, such as blocks or rows of blocks or ribs extending in the circumferential direction. Some profile elements, preferably all of them, have a net of notches, which are arranged within the profile elements according to a honeycomb pattern. One rib is arranged in the central region, in particular so as to extend along the equatorial plane. Such rib is made up of a row of block portions of rectangular or parallelogram shape.

EP1106393 describes a tyre for vehicles, in particular for use under winter driving conditions, comprising blocks which are arranged in a central row of blocks and are coupled with another row of blocks arranged close to the circumferential groove. At the same time, each block is divided by means of a substantially circumferential groove into two sections which have substantially the same size, and are coupled to one another.

Document JP 60 151104 A discloses a tyre having a tread comprising a central portion straddling an equatoral plane and two shoulder portions, wherein the central portion is separated from the shoulder portions of the tread by two first circumferential grooves, and wherein at least two circumferential grooves are present in the central portion. The Applicant has observed that a large number of transverse grooves with increased width improves traction particularly on wet surfaces, and ensures a good flexibility of the block itself, however their extensive use can compromise the performances on dry surfaces and increase the tyre noise. In fact, one of the main causes for noise is the continuous sequence of impacts of the block edges on the road surface.

In order to be able to maintain a high safety level in any use condition, particularly for winter tyres, the tyre must further have excellent braking features (both on dry and wet surfaces, and on snow), but also resistance to aquaplaning: two features conflicting with one another, since it is required a low void to rubber ratio as far as braking is concerned, but also an appropriate groove number and, above all, width (and thus a high void to rubber ratio) for ensuring a good water drainage.

The Applicant has further noted an increased void to rubber ratio in the central portion of winter tyres of the prior art compared to summer tyres. This choice is generally due to the need of improving drainage on wet surfaces, and ensuring a good flexibility of such a portion. However, the Applicant has noted that an increased void to rubber ratio can compromise the performances on dry surfaces, as well as increase tyre noise and wear.

The Applicant has found that the aforementioned reciprocally conflicting problems can be solved by means of a tread design comprising in the most central portion, close to the equatorial plane, a low void to rubber ratio, and comprising circumferential grooves with an undulating pattern in phase with each other.

More particularly, according to an aspect thereof, the present invention relates to a tyre for a motor vehicle having a tread comprising a central portion (L1) straddling an equatorial plane and two shoulder portions, the central portion (L1) being separated from the shoulder portions of the tread by two first circumferential grooves, at least two second circumferential grooves being present in said central portion (L1), characterized in that:
- said second circumferential grooves define a central circumferential rib comprising a plurality of sipes, arranged parallel to each other;
- said central rib (10) has a void to rubber ratio less than 0.1;
- said second circumferential grooves extend in an undulating pattern substantially in phase with each other along the circumferential extension of the tyre.

For the purposes of the present invention, the extension of circumferential and/or transverse grooves, as well as the pattern thereof, can be measured taking the mid-line of the radially outer edges as a reference.

Moreover, for the purposes of the present invention, the expression "substantially in phase with each other" referred to the circumferential grooves having an undulating pattern means that the distance in axial direction between the two grooves is substantially constant along the circumferential extension of the tyre.

The Applicant believes that the low void to rubber ratio together with the reduced size of the sipes provide the tread band, in the most central portion thereof, with a high structural compactness, so as to ensure excellent handling features, both on snow-covered surfaces and on wet and/or dry surfaces.

In the present description and in the subsequent claims, by "void to rubber" ratio it is meant the value of the ratio measurable in the footprint area between the tread portions where cuts and/or grooves (voids) are present and, thus, lacking physical contact with the ground, and the extension of the footprint area itself.

At the same time, the second undulated circumferential grooves make the central portion longitudinally less stiff. The Applicant believes that this improves the lateral stability and the tyre performances on bends under snow conditions, both by reducing the action on the steering action upon entering a bend, and by reducing the loss of grip of the rear tyres upon leaving a bend, when the user starts to accelerate again.

The present invention, in the aforementioned aspect, may have at least one of the preferred features described here below.

In order to reduce the presence of points with high stress concentration, the second circumferential grooves may extend along the circumferential extension of the tyre in a sinusoidal pattern.

Preferably, there is a functional relationship between the wavelength λ of the sinusoid and the pitch of the tyre.

Preferably, the second circumferential grooves may have a width less than 12 mm.

Advantageously, the second circumferential grooves may have a depth more than 5 mm.

Advantageously, the first and the second circumferential grooves define in the central portion (L1) two rows of central blocks, each row being positioned laterally with respect to the central rib.

Advantageously, the central rib may have a void to rubber ratio less than 0,07, preferably less than 0,06.

Preferably, each row of central blocks comprises a plurality of central blocks and a plurality of substantially transverse grooves. The transverse grooves are adapted to define the central blocks circumferentially.

Preferably, the substantially transverse grooves may extend over at least 50% of the width of the row of central blocks.

In the present description and in the subsequent claims, by extension of the transverse grooves it is meant the length of the projection of the aforementioned groove on a straight line perpendicular to the equatorial plane crossing the circumferential row.

For creating a portion suitable for trapping snow and ensuring a good water drainage, the substantially transverse grooves may have a variable width along their extensions, with a cross section decreasing towards the central rib.

Preferably, the transverse grooves may have a width less than 10 mm.

Each central block of the row of central blocks is delimited in the axial direction by a portion of one of the first circumferential grooves and by a portion of one of the second circumferential grooves, and in the circumferential direction by two substantially transverse grooves.

According to a particularly advantageous aspect, the central blocks may have rounded edges for creating snow grip fronts.

The blending of the edges of the central blocks, besides increasing the snow trapping action, and thus giving rise to a higher traction-braking, provides the block at an edge thereof with stiffness, for eliminating or in any case reducing uneven wear that could affect these portions of the tyre.

Preferably, each shoulder portion comprises at least one row of lateral blocks, comprising a plurality of shoulder blocks.

Advantageously, each shoulder block is delimited circumferentially by two substantially transverse grooves and axially by a portion of one of the first circumferential grooves.

Preferably, the substantially transverse grooves extend over at least 50% of the width of the row of shoulder blocks.

Advantageously, the shoulder blocks have rounded edges for creating snow grip fronts.

Advantageously, the grip fronts of the central blocks together with the grip fronts of the shoulder blocks create, at the intersection between the first circumferential grooves and the substantially transverse grooves, portions of the first circumferential grooves having a wider cross section for trapping snow.

In order to ensure an excellent grip on the ground on snow-covered grounds, each row of blocks may have a plurality of sipes.

The sipes may have an undulating pattern. Preferably, the sipes have a sinusoidal pattern.

The sipes have a depth between 2 and 10 mm, for example equal to 8 mm, and a width less than 2 mm.

Such pattern and sizing of the sipes provides at the same time excellent traction/braking features in any running condition of the tyre on straight stretches and/or on bends.

Preferably, the sipes are arranged substantially parallel to each other. Preferably, the sipes are spaced apart from each other by an amount which is a function of the pitch of the tyre.

Preferably, the sipes of the central ribs extend in a direction substantially perpendicular to the equatorial plane.

Advantageously, the sipes of the central and shoulder blocks extend into the central and shoulder blocks defining a direction opposite to the inclination of the substantially transverse grooves delimiting the blocks which contain them.

Moreover, in the present description and in the subsequent claims, each angle suitable for representing the inclination of a groove, or of a grip front, is intended to be defined by the angle formed between a plane parallel to the equatorial plane, passing through the axially nearest circumferential groove, and the plane to which the aforementioned groove or grip front belongs.

The tyre of the invention has a high grip, excellent braking/traction features on wet or snow-covered road surfaces, very low noise levels, a high comfort level and an excellent behaviour when running on dry road surfaces.

Features and advantages of the invention shall now be presented with reference to embodiments shown by way of non limiting examples in the accompanying figures, in which:
- Fig. 1 is a perspective view of a tyre having a tread made according to an example of the invention;
- Fig. 2 is a plan view of the tread of the tyre of Fig. 1;
- Fig. 2a is an enlarged cross-sectional view of the tread of figure 2;
- figure 2b is a plan view of an enlarged detail of the tread of the tyre of Fig. 2;
- Fig. 3 is a plan view of a variant of the tread of Fig. 2;
- Fig. 3a is an enlarged cross-sectional view of the tread of figure 3; and
- Fig. 4 show the noise spectra of a tyre according to the invention and of a reference tyre, measured inside a motor vehicle.

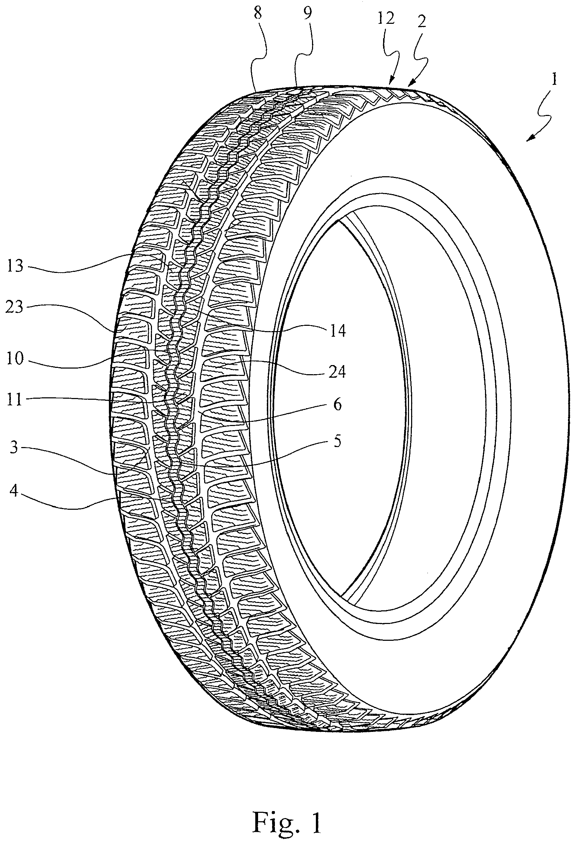

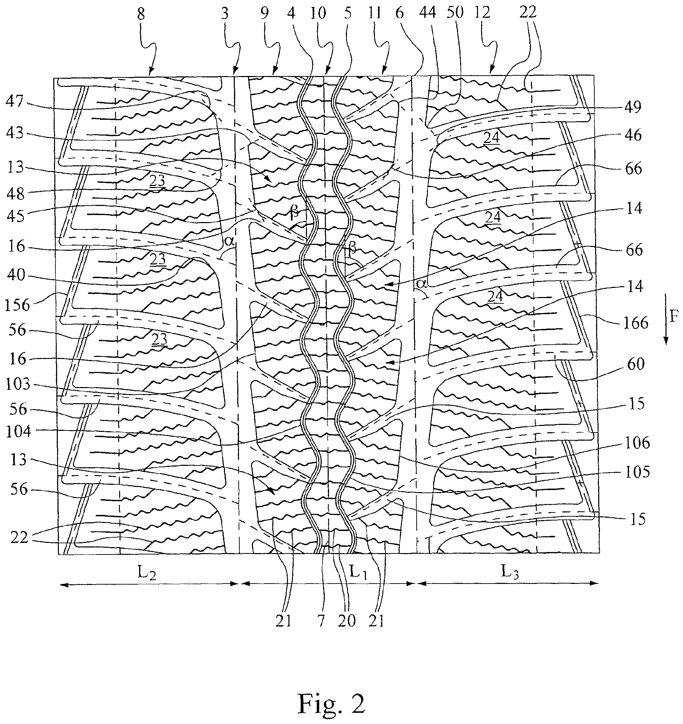

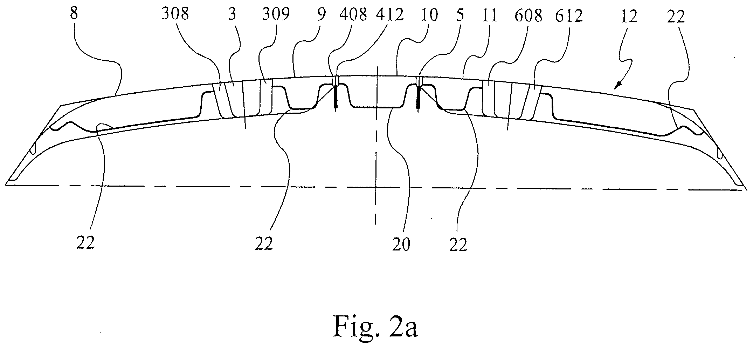

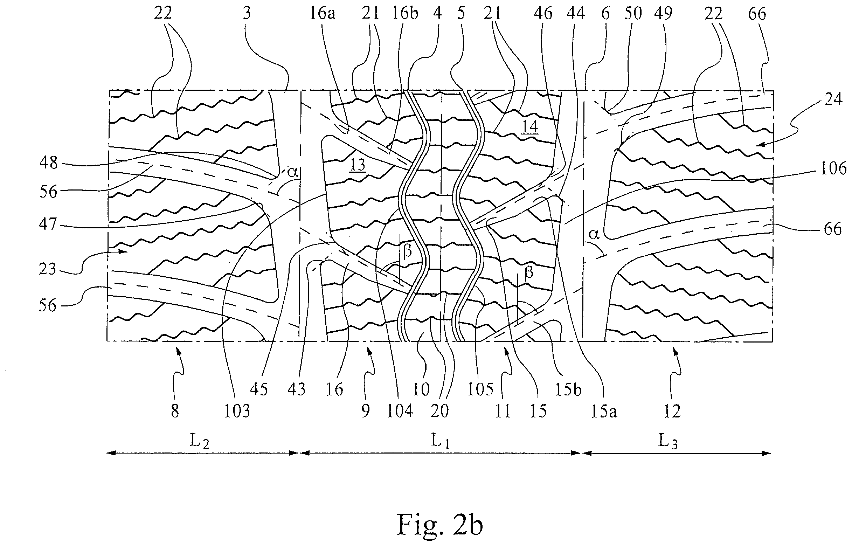

In Figs 1, 2, 2b a tyre 1 is shown with a first embodiment of the tread 2 according to the invention.

The structure of the tyre 1 is per se of a conventional type and comprises a carcass, a tread band crowning the carcass, a pair of axially opposite sidewalls, ending into beads reinforced with bead rings and respective bead inserts. Preferably, the tyre also comprises a belt structure interposed between the carcass and the tread band. The carcass comprises one or more carcass plies anchored to the bead rings, while the belt structure comprises two belt strips radially arranged one on top of the other. The belt strips are formed by sections of a rubberized textile incorporating metal cords, which cords are parallel to each other within each strip and have a crossed orientation with respect to those of the adjacent strips, with preferably symmetrical inclinations relative to the equatorial plane. Preferably, the belt structure also comprises a third belt strip, arranged in a radially outermost position and provided with cords oriented substantially parallel to the equatorial plane.

The tyre 1 preferably has a ratio H/C of the height the right cross section to the maximum width of the cross section between 0,35 and 0,80.

For ensuring a long mileage and, at the same time, high performances during the entire life of the tyre, particularly as far as handling is concerned, the tread 2 has globally a void to rubber ratio which is low when referred to a winter tyre, i.e. less than 0,35, preferably less than 0,34, for example equal to about 0,32.

The tread 2 is provided with circumferential grooves 3, 4, 5 and 6 (Figs 1-2b), extending in a longitudinal direction.

The tread 2 includes a central portion L1 and two shoulder portions L2, L3.

The tread 2 has a design of the directional type, in other words the design of the tread band is substantially mirror-like with respect to the equatorial plane and the substantially transverse grooves, which are arranged, starting from the central portion L1, in the direction of the shoulder portions, and define a rolling direction of the tyre 1, indicated by arrow F in figure 2.

By "substantially mirror-like" in the definition given just above it is meant a mirroring in a broad sense, which may encompass slight differences in some particulars and/or the staggered arrangement of a tyre part and/or portion on the right side of the equatorial plane relative to that on the left side.

In detail, the central portion L1 has two circumferential rows of blocks 9 and 11 and a central rib 10, axially delimited by the two second circumferential grooves 4, 5. The presence of the circumferential grooves 4, 5 makes globally less stiff in the longitudinal direction the central portion L1 of the tread band 2, while maintaining a high amount of rubber to the ground at the most central portion close to the equatorial plane 7 of the tyre 1. For this purpose, the central rib 10 has a void to rubber ratio less than 0,1.

The shoulder portion L2 is separated from the row 9 by the circumferential groove 3.

The row 9 lies between the circumferential grooves 3 and 4. The row 10 lies between the circumferential grooves 4 and 5. The row 11 lies between the circumferential rows 5 and 6. The shoulder portion L3 is separated from the block row 11 by the first circumferential groove 6.

The first circumferential grooves 3 and 6 preferably have a width ranging from about 5 mm to about 16 mm, more preferably from 7 to 11 mm. The first circumferential grooves 3 and 6 preferably have a depth ranging from about 5 mm to 11 mm.

The second circumferential grooves 4 and 5 have a width smaller than the width of the first circumferential grooves. Preferably, the second circumferential grooves 4, 5 have a width between 1,2 and 12 mm.

The second circumferential grooves 4 and 5 may have a constant width over their entire depth.

Preferably, the second grooves 4 and 5 may have a variable width over their depth. As an example, in the embodiment shown in figures 2 and 2a the second grooves 4 and 5 have along their radial extension two sections with different width: a first section at the radially outermost portion of the tread band having a larger width, in the range between 6 and 12 mm, for example equal to about 8 mm; and a second radially innermost section having a width between 1,2 mm and 5 mm, for example equal to about 2 mm.

The second circumferential grooves 4, 5 may have a depth less than 10 mm, preferably more than 5 mm, for example equal to 8 mm.

Alternatively, the first and second circumferential grooves 3, 6, 4, 5 might all have the same width and/or depth without departing from the scope of protection of the present invention.

The lateral walls of the first circumferential grooves 3, 6 may have an asymmetric inclination with respect to a straight line perpendicular to the tread band surface, in correspondence of the grooves themselves.

For example, as can be seen in figure 2a, the lateral wall 308 of the circumferential groove 3 has an inclination of about 10°, while the opposite wall 312 has an inclination of about 5° with respect to the perpendicular to the same groove 3.

Similarly, the lateral wall 612 of the circumferential groove 6 has an inclination of about 10°, while the opposite wall 608 has an inclination of about 5° with respect to the perpendicular to the same groove 6.

The lateral walls 408, 412 of the second circumferential groove 4 may have symmetrically mirror-like inclinations with respect to their centre line. In detail, the lateral wall 408, as well as the lateral wall 412, of the circumferential groove 4 has an inclination of about 5° with respect to its centre line.

Also the lateral walls 508, 512 of the second circumferential groove 5, like the lateral walls 408, 412 of the second circumferential groove 4, may have symmetrically mirror-like inclinations with respect to their centre line.

In detail, the lateral wall 508, as well as the lateral wall 512, of the circumferential groove 5 has an inclination of about 5° with respect to its centre line.

Finally, the circumferential groove 6 may have a depth less than 10 mm, preferably more than 5 mm, for example equal to 8 mm.

The lateral walls of the grooves 3, 4, 5, 6 might have inclinations with respect to their centre line different from those mentioned above without departing from the scope of protection of the present invention.

In order to improve the lateral stability of the tyre, and therefore the tyre performances while driving on bends under snow conditions, the second circumferential grooves 4, 5 have an undulating pattern.

Preferably, the circumferential grooves 4, 5 have a mid-line extending in a curvilinear pattern along the circumferential extension of the tyre. For example, in the embodiment shown in figures 1, 2, 2a, 2b, the second circumferential grooves 4, 5 have a mid-line extending in a sinusoidal pattern along the circumferential extension of the tyre.

The concavity alternation, with reference to the plane parallel to the equatorial plane 7, of the sinusoidal pattern provides an excellent balance of the traction/braking features above all on bends, at the same time reducing the presence of points with high stress concentration.

For increasing the amount of rubber to the ground at the central rib 10, the second circumferential grooves 4, 5 are substantially in phase with each other along the circumferential extension of the tyre. This feature ensures a high amount of "rubber to the ground" at the central rib 10, thus a low void to rubber ratio and, as a consequence, excellent handling features and low noise.

The mid-lines of the second circumferential grooves 4, 5 extend along the circumferential extension of the tyre in a sinusoidal pattern defined by a wavelength λ and a wave amplitude α.

Preferably, the ratio of the amplitude to the wavelength α/λ is more than 0,07.

Even more preferably, said ratio is less than 0,15.

The Applicant believes that such sizing even more promotes the formation of a substantially circumferential groove with an almost complete absence of points with high stress concentration.

In the embodiment shown in figures 2-2b there is a substantial correspondence between the wavelength λ and the pitch of the tyre, which in this specific case is equal to one. In other words, along the circumferential extension the wavelength λ is substantially equal to each pitch of the tyre 1 (therefore, to a pitch variation corresponds a wavelength variation).

As previously anticipated, the first circumferential grooves 3, 6 separate the central portion L1 of the tread from the shoulder portions L2, L3, while the second circumferential grooves 4, 5 define in the central portion L1 of the tread two central circumferential rows of blocks 9, 11 and a central rib 10. Preferably, the central rib 10 straddles the equatorial plane 7.

At least one of the central rows of blocks 9, 11 comprises substantially transverse grooves 15, 16 extending over at least 50% of the width of the row itself.

In the embodiment shown in figures 2 - 2b, preferably the substantially transverse grooves 15, 16 extend over the entire width of the central row of blocks 9, 11, defining central blocks 13, 14.

In detail, the row 9 has a sequence of blocks 13 and the row 11 comprises a sequence of blocks 14.

In the example of figure 2, the tread 2 has a void to rubber ratio equal to about 0.18 in the row of shoulder blocks 8; a void to rubber ratio equal to about 0.13 in the circumferential row of blocks 9; a void to rubber ratio equal to about 0.08 in the circumferential row of blocks 10; a void to rubber ratio equal to about 0.13 in the circumferential row of blocks 11; and a void to rubber ratio equal to about 0.18 in the row shoulder of blocks 12.

The congruent void to rubber ratio in the rows of shoulder blocks 8, 12 favours the running behaviour of the motor vehicle on a wet road surface, particularly when the tyres are mounted on a motor vehicle having medium engine capacity.

Each block 13 of the circumferential row 9 is delimited axially by a portion 103 of the first circumferential groove 3 and by a portion 104 of the second circumferential groove 4, and circumferentially by two circumferentially consecutive transverse grooves 16.

As previously mentioned, in the preferred embodiment shown in figures 1-2b, each transverse groove 16 extends from the axially outermost circumferential groove 3 to the adjacent circumferential groove 4. Each transverse groove 16 has a mid-line having an inclination with respect to the equatorial plane 7, so as to form an angle β less than 80°, preferably more than 30°, for example equal to about 65°.

Each transverse groove 16 may have a width between 3 and 10 mm, preferably between 3,5 and 7 mm, for example equal to 4 mm.

The transverse grooves 16 have a variable width along their extension. In order to facilitate the trapping of snow, the grooves 16 are formed by two substantially straight portions, of which the axially outermost one 16a has a larger width and the axially innermost one 16b has a width decreasing towards the equatorial plane 7.

The transverse grooves 16 may have a depth less than 12 mm, preferably less than 10 mm, for example equal to 8 mm.

For providing more strength in the central portion L1, the transverse grooves 16 do not have a constant depth over their entire extension, having instead a constant depth over a determined axially outermost portion and a depth smoothly decreasing while moving towards the second circumferential groove 4.

Each block 14 of the circumferential row 11 is delimited axially by a portion 106 of the first circumferential groove 6 and by a portion 105 of the second circumferential groove 5, and circumferentially by two circumferentially consecutive transverse grooves 15.

The blocks 14 of the row 11 have the same shape of the blocks 13 of the row 9, but are arranged slightly staggered in the circumferential direction with respect to them.

As previously mentioned, in the preferred embodiment shown in figures 1-2b, each transverse groove 15 extends from the axially outermost first circumferential groove 6 to the adjacent circumferential groove 5. Each transverse groove 15 has a mid-line having an inclination with respect to the equatorial plane 7, so as to form an angle β less than 80°, preferably more than 30°, for example equal to about 65°.

Each transverse groove 15 may have a width between 3 and 10 mm, preferably between 3,5 and 7 mm, for example equal to 4 mm.

The transverse grooves 15, as the grooves 16, have a variable width along their extension. In fact, in order to facilitate the trapping of snow, the grooves 15 are formed by two substantially straight portions 15a, 15b, of which the axially outermost one 15a has a larger width and the axially innermost one 15b has a width decreasing towards the equatorial plane 7.

The transverse grooves 15 have a depth less than 12 mm, preferably less than 10 mm, for example equal to 8 mm.

For providing more strength in the central portion L1, the transverse grooves 15 do not have a constant depth over their entire extension, having instead a constant depth over a determined axially outermost portion and a depth smoothly decreasing while moving towards the second circumferential groove 5.

For increasing the traction-braking features on snow, particularly when the motor vehicle makes a small steering, the central blocks 13 and 14 do not have sharp edges, but rather rounded edges, thus creating snow grip fronts, see figure 2b.

In detail, the axially outer portion of each central block 13, respectively 14, is blended with the lower wall of the groove 16, respectively 15, so as to form an upper grip front 43, respectively 44. The edges at the upper grip fronts 43, 44 are defined by planes forming acute angles between each other.

The axially outer portion of each central block 13, respectively 14, is blended with the upper wall of the groove 16, respectively 15, so as to form a lower grip front 45, respectively 46. The edges at the lower grip fronts 45, 46 are defined by planes forming obtuse angles between each other.

The blending of the edges of the central blocks 13, 14, besides increasing the snow trapping action, and thus giving rise to a higher traction-braking, provides the block 13 at an edge thereof with stiffness, for eliminating or in any case reducing uneven wear phenomena.

In order to ensure an excellent grip to the ground on snow-covered grounds, the blocks 13, 14, as well as the rib 10, comprise a plurality of sipes 20, 21.

The sipes 20, 21 have an undulating pattern, preferably sinusoidal.

The sipes 20, 21 may have a depth between 2 and 10 mm, for example equal to 8 mm, and a width less than 2 mm.

Preferably, the sipes 20 extend into the central rib 10 defining an average extension direction substantially perpendicular to the equatorial plane 7 of the tyre 1.

Preferably, the sipes 21 extend into the central blocks 13, 14 defining an average extension direction substantially opposite to the inclination of the mid-line of the transverse grooves 15, 16.

The average extension direction of the sipes 21 and the inclination of the transverse grooves 15, 16 delimiting the central blocks 13, 14 preferably form an angle less than 90°, more preferably an angle less than 75°, for example an angle of about 40°.

As previously anticipated, the two shoulder portions L2, L3 are axially delimited from the central portion L1 of the tread 2 respectively by the first grooves 3 and 6.

Each shoulder portion L2 and L3 comprises transverse grooves 56, respectively 66.

The transverse grooves 56, respectively 66, are circumferentially replicated.

The transverse grooves 56, respectively 66, have a mid-line having an inclined pattern with respect to the equatorial plane 7.

In particular, the mid-line of the grooves 56 forms with the equatorial plane 7 an angle ω, which is less than 90°.

In the embodiment shown in figures 2 - 2b the angle ω is more than 45°, preferably equal to 80°.

Each groove 56, respectively 66, extends from the axially innermost groove 3, respectively 6, up to close the respective axially outermost edge of the tread band 2.

Close to the respective axially outermost edge of the tread band 2, through a substantially longitudinal portion 156, 166, each groove 56, respectively 66, is connected with the circumferentially consecutive transverse groove 56, respectively 66.

The grooves 56, 66 do not have a constant depth, but rather a variable depth. In order to increase the structural strength of the shoulder blocks, the longitudinal grooves 56, 66 have a variable depth which decreases at the respective ends forming steps.

In particular, each longitudinal groove 56, 66 in the central portion has a substantially constant depth more than 3 mm and less than 10 mm, preferably equal to 8 mm.

In the end portions, the longitudinal grooves 56, 66 have a depth between 1 mm and 5 mm, preferably equal to 2 mm.

However, the longitudinal grooves 56, 66 might have different depths without departing from the scope of protection of the present invention.

Through their pattern and together with the first circumferential groove 3, the grooves 56 define a row of blocks 8 on the shoulder L2. The row of blocks 8 has a plurality of shoulder blocks 23.

Each shoulder block 23 is thus delimited circumferentially by two substantially transverse grooves 56, circumferentially consecutive, and axially by a portion of a first circumferential groove 3 and by a substantially longitudinal portion 156.

Similarly, the grooves 66 define, together with the first circumferential groove 6, a row of blocks 12 on the shoulder. The row of blocks 12 has a plurality of shoulder blocks 24.

Each shoulder block 24 is thus delimited circumferentially by two substantially transverse grooves 66, circumferentially consecutive, and axially by a portion of a first circumferential groove 6 and by a substantially longitudinal portion 166.

For increasing the traction-braking features on snow, the blocks 23 and 24, also in this case, do not have sharp edges, but rather rounded edges, thus creating snow grip fronts.

In detail, the axially inner portion of each block 23 is blended with the lower wall of the groove 56 so as to form a lower grip front 47. The edges at the upper grip front 47 are defined by planes forming an obtuse angle between each other.

The axially inner portion of each block 23 is blended with the upper wall of the transverse groove 56 so as to form a lower grip front 48. The edges at the lower grip front 48 are defined by planes forming an acute angle between each other.

The blending of the edges of the block 23, besides increasing the snow trapping action, and thus giving rise to a higher traction-braking, provides the block 23 at an edge thereof with stiffness, for eliminating or in any case reducing the occurrence of uneven wear phenomena.

At each intersection, formed by the first groove 3 and the transverse 56 and 16, the lower grip front 48 of the block 23 has an inclination substantially parallel to the inclination of the upper grip front 43 of the block 13, while the upper grip front 47 of the block 23 has an inclination substantially parallel to the inclination of the lower grip front 45 of the block 13.

In this way, at each intersection there is a widening portion of the first groove 3, which creates a snow trapping zone, which increases friction of snow against snow, and thus of the tyre against the ground, and significantly improves the traction-braking of the tyre on a snow-covered surface.

The same happens for the blocks 24.

In detail, the axially inner portion of each block 24 is blended with the lower wall of the groove 66 so as to form an upper grip front 49. The edges at the upper grip front 49 are defined by planes forming an obtuse angle between each other.

The axially inner portion of each block 24 is blended with the upper wall of the groove 66 so as to form a lower grip front 50. The edges at the lower grip front 50 are defined by planes forming an acute angle between each other.

The blending of the edges of the block 24, besides increasing the snow trapping action, and thus giving rise to a higher traction-braking, provides the block 24 at an edge thereof with stiffness, for eliminating or in any case reducing the occurrence of uneven wear phenomena.

At each intersection, formed by the first groove 6 and the transverse grooves 66 and 15, the plane defined by the lower grip front 50 of the shoulder block 24 has an inclination substantially parallel to the inclination of the plane defined by the upper grip front 44 of the central block 14, while the plane defined by the upper grip front 49 of the block 24 has an inclination substantially parallel to the inclination of the plane defined by the lower grip front 46 of the central block 14. In this way, at each intersection there is a widening portion of the first groove 6, which creates a snow trapping zone.

In order to further increase the grip to the ground on snow-covered grounds, the shoulder blocks 23, 24, similarly to the central blocks 14, 15, are covered by sipes 22.

The sipes 22 have an undulating pattern, preferably sinusoidal. The sipes 22 may have a depth between 2 and 10 mm, for example equal to 8 mm, and a width less than 2 mm.

In order to provide a better balancing between traction and braking, the sipes 22 extend into the blocks 23, respectively 24, with an inclination opposite to the inclination of the grooves 56, respectively 66.

The main extension direction of the sipes 22 and the inclination of the transverse grooves 56, 66 delimiting the central blocks 23, 24 form an angle less than 90°, preferably an angle less than 75°, for example an angle of about 40°.

The undulation of the sipes 22 and their inclination opposite to that of the grooves 56, 66 provides the block 23, respectively 24, with a higher strength.

In fact, the block deformation while running on a bend is opposed.

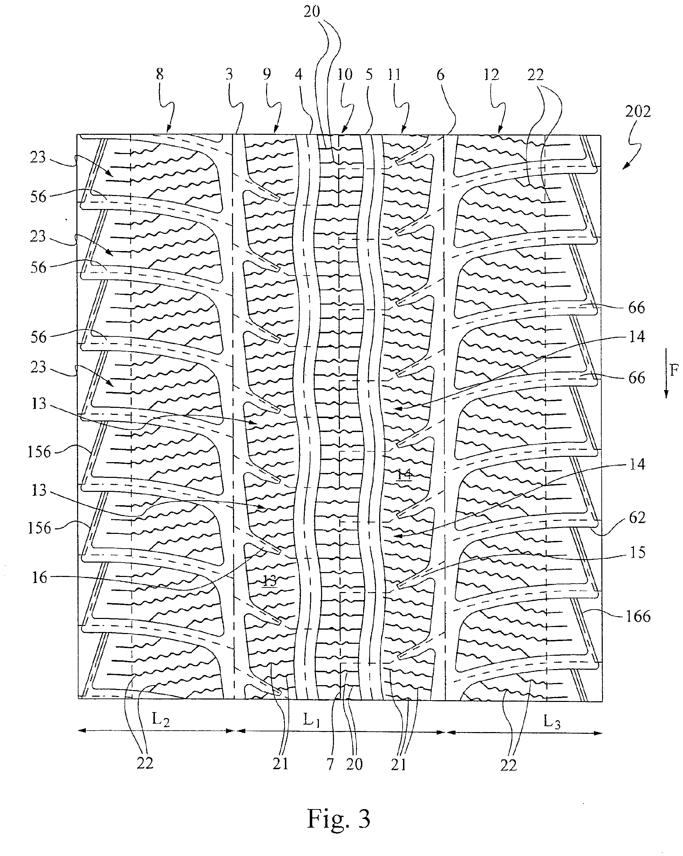

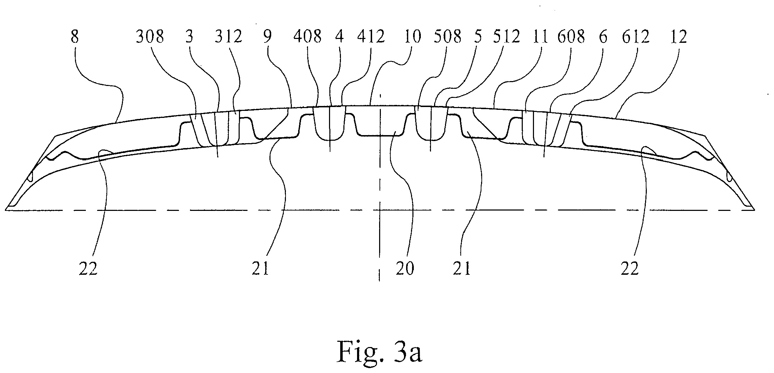

In figure 3 a tread is shown which is a variation of the tread of Fig. 2 and in which the corresponding elements are indicated with the same reference numerals. The tread 202 is totally similar to tread 2, except for the extension of the transverse grooves 16, 15 of the central portion L1 and for the kind of undulating pattern of the second grooves 4, 5.

In this case, in fact, the transverse grooves 15 and 16 do not extend over the entire width of the row of blocks 9 and 11, but only over a portion thereof.

Each transverse groove 14, respectively 15, extends from the first circumferential groove 3, respectively 6, towards the adjacent second circumferential groove 4, respectively 5, with an extension equal to at least 50% of the width of the said row of blocks 9; 11, preferably with an extension equal to at least 70%.

The second circumferential grooves 4, 5 have also in this case an undulating pattern.

Preferably, the circumferential grooves 4,5 have a mid-line extending along the circumferential extension of the tyre 1 in a curvilinear pattern. Also in the embodiment of figure 3, the second circumferential grooves 4, 5 have a mid-line extending along the circumferential extension of the tyre in a sinusoidal pattern.

For increasing the amount of rubber to the ground at the central rib 10, the second circumferential grooves 4, 5 are substantially in phase with each other along the circumferential extension. This feature ensures a high amount of "rubber to the ground" at the central rib 10, thus a low void to rubber ratio and, as a consequence, excellent handling features and low noise.

Compared to the sinusoidal pattern of the tread band shown in figures 2-2a the sinusoids defined by the mid-lines of the second grooves 4, 5 have a smaller amplitude and a greater wavelength λ. The mid-lines of the second circumferential grooves 4, 5 extend in fact along the circumferential extension of the tyre in a sinusoidal pattern defined by a wavelength λ an wave amplitude α. Preferably, the ratio between amplitude and wavelength α/λ is more than 0,03.

Preferably, the ratio between amplitude and wavelength α/λ is less than 0,015.

Moreover, the ratio between the wavelength of the sinusoid and the pitch of the tyre is modified, in this case being about in a 1:2 relationship. In other words, one wavelength λ every two pitches.

An increased wavelength λ provides the tyre with higher traction on bends, since it increases the supporting surface provided by the second grooves.

In the embodiment shown in figure 3, 3a the second circumferential grooves 4, 5 have a width greater than the width of the second circumferential grooves 4, 5 of the embodiment shown in figures 2, 2a, 2b. In this case, in fact, the second circumferential grooves 4, 5 may have a width in the range between 8 mm and 12 mm.

On the contrary, in the embodiment of figures 2, 2a, 2b the second circumferential grooves 4, 5 preferably have a width in the range between 1,2 mm and 5 mm.

The Applicant believes that the embodiment shown in the figures 2, 2a, 2b is particularly suitable for tyres having a reduced cross-sectional width (chord), for example tyres having a nominal cross-sectional width up to 195. On the contrary, the Applicant believes that the embodiment shown in figures 3, 3a is particularly suitable for tyres having a larger cross-sectional width.

A sample of the tyre of the invention having the tread of Figs 1-2 was made and tested in comparison with a tyre manufactured by the Applicant having excellent behavioural features on snow-covered, wet and dry surfaces, and homologated for medium engine capacity motor vehicles.

Both tyres had size 195/65 R15, with rim 7JX16 and an inflation pressure of 2,2 bar.

A Volkswagen Golf 5 motor vehicle was initially equipped with four tyres of the invention and then with four comparison tyres.

Aquaplane tests on a straight stretch and on a bend, on a dry and a wet road surface, traction and braking tests, tests of the running behaviour on a snow-covered road surface, noise tests inside and outside the motor vehicle and comfort tests were performed.

The aquaplane test on a straight stretch was carried out on a straight stretch of smooth asphalt of predetermined length (100 m) covered with a water layer of predetermined constant height (7 mm), which was automatically restored after each passage of the tested vehicle. For the test, the stretch is entered at a constant speed (about 70 km/h) under full grip conditions and then an acceleration is performed until reaching conditions of complete grip loss.

The aquaplane test on a bend was carried out on a path stretch with smooth and dry asphalt, at a bend with constant radius (100 m) having a predetermined length and comprising, at end portion thereof, a region of predetermined length (20 m) flooded with a water layer of predetermined depth (6 mm). The test was conducted at a constant speed, for different speed values.

The maximum centrifugal force and the maximum speed of the vehicle corresponding to complete aquaplane were measured during the test.

The traction test was performed on a straight snow-covered stretch, measuring the traction force while accelerating from 70 to 100 km/h. The traction force is determined as arithmetical mean over a set of subsequent measurements.

The braking test was performed on a straight stretch on a snow-covered ground, measuring the braking deceleration from a predetermined initial speed, typically 80 km/h, to about 5 km/h. The braking deceleration is determined as arithmetical mean over a set of subsequent measurements.

The running behaviour test in snow-covered, dry and wet surface conditions is performed on predetermined paths, typically tracks closed to traffic. By simulating some characteristic manoeuvring (such as change of lane, overtaking, slalom between traffic cones, entering and leaving a bend) at a constant speed, as well as during acceleration and deceleration, the test driver evaluates the performances of the tyre by giving a score to the behaviour of the latter during the aforementioned manoeuvring.

The evaluation scale represents a subjective evaluation made by the test driver which tests the equipments one after the other.

The test results are reproduced in Table 1, where the score values are expressed in percentage, setting to 100 the values referred to the comparison tyre.

**Table I**

| | Comparison | Invention |
|---|---|---|
| Aquaplane on a bend | 100 | 102 |
| Aquaplane on straight stretch | 100 | 100 |
| Braking on snow | 100 | 101 |
| Traction on snow | 100 | 103 |
| Behaviour on dry surface | 100 | 103 |
| Behaviour on wet surface | 100 | 104 |
| Behaviour on snow-covered surface | 100 | 104 |

In Table I, values higher than 100 indicate an improvement with respect to the reference tyre.

The test results demonstrate that the tyre of the invention has globally a better behaviour compared to the reference tyre.

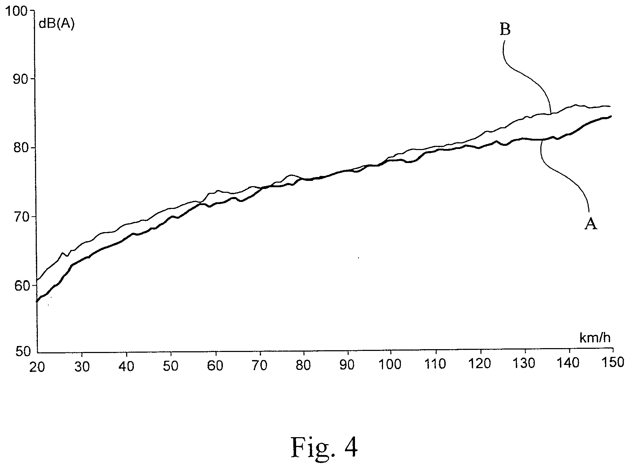

In Fig. 4 the diagrams of the noise intensity dB(A) measured inside the passenger compartment of the vehicle as a function of the frequency are shown, for the tyre of the invention (line B) and for the comparison tyre (line A).

The diagrams of Fig. 4 show that the tyre of the invention has proven on average less noisy than the comparison tyre by about 2 dB(A), particularly at speeds lower than 80 km/h, i.e. exactly at those speeds at which the vehicle user cares the most.

## Claims

1. Tyre (1) having a tread (2) comprising a central portion (L1) straddling an equatorial plane (7) and two shoulder portions (L2, L3), the central portion (L1) being separated from the shoulder portions of the tread by two first circumferential grooves (3, 6), at least two second circumferential grooves (4, 5) being present in said central portion (L1), **characterized in that**:
- said second circumferential grooves (4, 5) define a central circumferential rib (10) comprising a plurality of sipes (20); said sipes (20) extend into the central rib (10) in a direction substantially perpendicular to said equatorial plane (7);
- said central rib (10) has a void to rubber ratio less than 0.1;
- said second circumferential grooves (4, 5) extend in an undulating pattern substantially in phase with each other along the circumferential extension of the tyre.

2. Tyre according to Claim 1, **characterized in that** said circumferential grooves (4, 5) extend along the circumferential extension of the tyre in a curvilinear undulating pattern.

3. Tyre (1) according to Claim 1, **characterized in that** said circumferential grooves (4, 5) extend along the circumferential extension of the tyre in a sinusoidal pattern.

4. Tyre (1) according to any one of the preceding claims, **characterized in that** it comprises a functional relationship between the wavelength and the pitch of the tyre (1).

5. Tyre according to any one of the preceding claims, **characterized in that** said second circumferential grooves (4, 5) have a width less than 12 mm.

6. Tyre according to any one of the preceding claims, **characterized in that** said second circumferential grooves (4, 5) have a depth more than 5 mm.

7. Tyre according to any one of the preceding claims, **characterized in that** said second circumferential grooves (3, 4) define in the central portion (L1) two rows of central blocks (9; 11), each positioned laterally with respect to the central rib (10), each central row of blocks (9, 11) having a plurality of sipes (21).

8. Tyre according to any one of the preceding claims, **characterized in that** each row of central blocks (9; 11) comprises a plurality of central blocks (13; 14) and a plurality of substantially transverse grooves (15, 16) which define said central blocks (13; 14) circumferentially, said substantially transverse grooves (15, 16) extending over at least 50% of the width of said central row of blocks (9; 11).

9. Tyre according to Claim 8, **characterized in that** the substantially transverse grooves (15; 16) have a variable width along their extensions, with decreasing cross section towards said central rib (10).

10. Tyre according to any one of the preceding claims, **characterized in that** the substantially transverse grooves (15; 16) have a width less than 10 mm.

11. Tyre according to any one of the preceding claims 8 to 10, **characterized in that** each central block (13; 14) of the row of central blocks (9; 11) is axially delimited by a portion (103; 106) of a first circumferential groove (3, 6) and by a portion (104; 105) of a second circumferential groove (4; 5), and in circumferential direction by two substantially transverse grooves (15; 16).

12. Tyre according to any one of the preceding claims 8 to 11, **characterized in that** said blocks (13; 14) have rounded edges.

13. Tyre according to any one of the preceding claims, **characterized in that** each shoulder portion comprises at least one row of lateral blocks (8, 12) comprising a plurality of shoulder blocks (23, 24) and a plurality of substantially transverse grooves (56; 66), each row of shoulder blocks (8; 12) comprising a plurality of sipes (22).

14. Tyre according to claim 13, **characterized in that** each shoulder block (23, 24) is delimited circumferentially by two substantially transverse grooves (56; 66) and axially by a portion of a first circumferential groove.

15. Tyre according to claim 13 or 14, **characterized in that** said substantially transverse grooves (56; 66) extend over at least 50% of the width of said row of blocks (8; 12) .

16. Tyre according to any one of claims 13 to 15, **characterized in that** said shoulder blocks (23, 24) have rounded edges.

17. Tyre according to claims 12 and 16, **characterized in that** the rounded edges of said central blocks (13; 14), together with the rounded edges of the shoulder blocks (23; 24), create portions of the first circumferential groove (3; 4) with a wider cross section at the intersections between the first circumferential grooves (3; 4) and the substantially transverse grooves (56; 16; 66, 15).

18. Tyre according to any one of the preceding claims, **characterized in that** said sipes (20; 21; 22) have an undulating pattern, said sipes (20; 21; 22) preferably having a sinusoidal pattern.

19. Tyre according to any one of Claims 7 or 13, **characterized in that** said sipes (21; 22) extend into said blocks (13; 14; 23; 24) defining a direction substantially opposite to the inclination of the grooves (15; 16; 56; 66) delimiting the blocks which contain them (14; 15).

## Patentansprüche

1. Reifen (1) mit einer Lauffläche (2) umfassend einen zentralen Abschnitt (L1), der eine Äquatorialebene (7) überspannt, und zwei Schulterabschnitte (L2, L3), wobei der zentrale Abschnitt (L1) durch von den beiden Schulterabschnitte der Lauffläche durch zwei erste umlaufende Nuten (3, 6) getrennt ist, wobei zumindest zwei zweite umlaufende Nuten (4, 5) in dem zentralen Abschnitt (L1) vorliegen, **dadurch gekennzeichnet, dass**:
- die zweiten umlaufenden Nuten (4, 5) eine zentrale umlaufende Rippe (10) umfassend eine Vielzahl von Lamellen (20) definieren; wobei die Lamellen (20) sich in die zentrale Rippe (10) in einer Richtung im Wesentlichen senkrecht auf die Äquatorialebene (7) erstrecken;
- die zentrale Rippe (10) ein Verhältnis von negativen und positiven Profilanteilen kleiner als 0,1 aufweist;
- die zweiten umlaufenden Nuten (4, 5) sich in einem wellenförmigen Muster im Wesentlichen gleichphasig zueinander entlang der Umfangserstreckung des Reifens erstrecken.

2. Reifen nach Anspruch 1, **dadurch gekennzeichnet, dass** die umlaufenden Nuten (4, 5) sich entlang der Umfangserstreckung des Reifens in einem kurvenartig wellenförmigen Muster erstrecken.

3. Reifen (1) nach Anspruch 1, **dadurch gekennzeichnet, dass** die umlaufenden Nuten (4, 5) sich entlang der Umfangserstreckung des Reifens in einem sinusförmigen Muster erstrecken.

4. Reifen (1) nach einem der vorhergehenden Ansprüche, **dadurch gekennzeichnet, dass** er eine funktionelle Beziehung zwischen der Wellenlänge und der Teilung des Reifens (1) umfasst.

5. Reifen nach einem der vorhergehenden Ansprüche, **dadurch gekennzeichnet, dass** die zweiten umlaufenden Nuten (4, 5) eine Breite kleiner als 12 mm aufweisen.

6. Reifen nach einem der vorhergehenden Ansprüche, **dadurch gekennzeichnet, dass** die zweiten umlaufenden Nuten (4, 5) eine Breite von mehr als 5 mm aufweisen.

7. Reifen nach einem der vorhergehenden Ansprüche, **dadurch gekennzeichnet, dass** die zweiten umlaufenden Nuten (3, 4) in dem zentralen Abschnitt (L1) zwei Reihen von zentralen Blöcken (9; 11) definieren, die jeweils seitlich in Bezug auf die zentrale Rippe (10) positioniert sind, wobei jede zentrale Reihe von Blöcken (9, 11) eine Vielzahl von Lamellen (21) aufweist.

8. Reifen nach einem der vorhergehenden Ansprüche, **dadurch gekennzeichnet, dass** jede Reihe von zentralen Blöcken (9; 11) eine Vielzahl von zentralen Blöcken (13; 14) und eine Vielzahl von im Wesentlichen querverlaufenden Nuten (15, 16) umfasst, die die zentralen Blöcke (13; 14) umlaufend definieren, wobei die im Wesentlichen querverlaufenden Nuten (15, 16) sich über zumindest 50% der Breite der zentralen Reihe von Blöcken (9; 11) erstrecken.

9. Reifen nach Anspruch 8, **dadurch gekennzeichnet, dass** die im Wesentlichen querverlaufenden Nuten (15; 16) entlang ihrer Erstreckungen eine variable Breite mit einem zu der zentralen Rippe (10) hin abnehmenden Querschnitt aufweisen.

10. Reifen nach einem der vorhergehenden Ansprüche, **dadurch gekennzeichnet, dass** die im Wesentlichen querverlaufenden Nuten (15, 16) eine Breite kleiner als 10 mm aufweisen.

11. Reifen nach einem der vorhergehenden Ansprüche 8 bis 10, **dadurch gekennzeichnet, dass** jeder zentrale Block (13; 14) der Reihe von zentralen Blöcken (9; 11) axial durch einen Abschnitt (103; 106) einer ersten umlaufenden Nut (3, 6) und durch einen Abschnitt 105) einer zweiten umlaufenden Nut (4; 5) begrenzt wird, und in Umfangsrichtung durch zwei im Wesentlichen querverlaufende Nuten (15; 16).

12. Reifen nach einem der vorhergehenden Ansprüche 8 bis 11, **dadurch gekennzeichnet, dass** die Blöcke (13; 14) abgerundete Kanten aufweisen.

13. Reifen nach einem der vorhergehenden Ansprüche, **dadurch gekennzeichnet, dass** jeder Schulterabschnitt zumindest eine Reihe von seitlichen Blöcken (8, 12) umfassend eine Vielzahl von Schulterblöcken (23, 24) und eine Vielzahl von im Wesentlichen querverlaufenden Nuten (56; 66) umfasst, wobei jede Reihe von Schulterblöcken (8; 12) eine Vielzahl von Lamellen (22) umfasst.

14. Reifen nach Anspruch 13, **dadurch gekennzeichnet, dass** jeder Schulterblock (23, 24) umlaufend durch zwei im Wesentlichen querverlaufende Nuten (56; 66) und axial durch einen Abschnitt einer ersten umlaufenden Nut begrenzt wird.

15. Reifen nach Anspruch 13 oder 14, **dadurch gekennzeichnet, dass** die im Wesentlichen querverlaufenden Nuten (56; 66) sich über zumindest 50 % der Breite der Reihe von Blöcken (8; 12) erstrecken.

16. Reifen nach einem der vorhergehenden Ansprüche 13 bis 15, **dadurch gekennzeichnet, dass** die Schulterblöcke (23; 24) abgerundete Kanten aufweisen.

17. Reifen nach den Ansprüchen 12 und 16, **dadurch gekennzeichnet, dass** die abgerundeten Kanten der zentralen Blöcke (13; 14) zusammen mit den abgerundeten Kanten der Schulterblöcke (23; 24) Abschnitte der ersten umlaufenden Nut (3; 4) mit einem breiteren Querschnitt an den Schnittpunkten zwischen den ersten umlaufenden Nuten (3; 4) und den im Wesentlichen querverlaufenden Nuten (56; 16; 66, 15) erzeugen.

18. Reifen nach einem der vorhergehenden Ansprüche, **dadurch gekennzeichnet, dass** die Lamellen (20; 21; 22) ein wellenförmiges Muster aufweisen, wobei die Lamellen (20; 21; 22) vorzugsweise ein sinusförmiges Muster aufweisen.

19. Reifen nach einem der Ansprüche 7 oder 13, **dadurch gekennzeichnet, dass** die Lamellen (21; 22) sich in die Blöcke (13; 14; 23; 24) hinein erstrecken, wobei sie eine der Neigung der Nuten (15; 16; 56; 66), die die Blöcke begrenzen, die diese (14; 15) enthalten, im Wesentlichen entgegengesetzte Richtung definieren.

## Revendications

1. Pneu (1) ayant une bande de roulement (2) comprenant une partie centrale (L1) chevauchant un plan équatorial (7) et deux parties d'épaulement (L2, L3), la partie centrale (L1) étant séparée des parties d'épaulement de la bande de roulement par deux premières rainures circonférentielles (3, 6), au moins deux deuxièmes rainures circonférentielles (4, 5) étant présentes dans ladite partie centrale (L1), **caractérisé en ce que** :
- lesdites deuxièmes rainures circonférentielles (4, 5) définissent une nervure circonférentielle centrale (10) comprenant une pluralité de lamelles (20) ; lesdites lamelles (20) s'étendent dans la nervure centrale (10) dans une direction essentiellement perpendiculaire audit plan équatorial (7) ;
- ladite nervure centrale (10) a un rapport vide-caoutchouc inférieur à 0,1 ;
- lesdites deuxièmes rainures circonférentielles (4, 5) s'étendent selon un motif ondulé essentiellement en phase l'une avec l'autre le long de l'extension circonférentielle du pneu.

2. Pneu selon la revendication 1, **caractérisé en ce que** lesdites rainures circonférentielles (4, 5) s'étendent le long de l'extension circonférentielle du pneu selon un motif ondulé curviligne.

3. Pneu (1) selon la revendication 1, **caractérisé en ce que** lesdites rainures circonférentielles (4, 5) s'étendent le long de l'extension circonférentielle du pneu selon un motif sinusoïdal.

4. Pneu (1) selon l'une quelconque des revendications précédentes, **caractérisé en ce qu'**il comprend une relation fonctionnelle entre la longueur d'onde et le pas du pneu (1) .

5. Pneu selon l'une quelconque des revendications précédentes, **caractérisé en ce que** lesdites deuxièmes rainures circonférentielles (4, 5) ont une largeur inférieure à 12 mm.

6. Pneu selon l'une quelconque des revendications précédentes, **caractérisé en ce que** lesdites deuxièmes rainures circonférentielles (4, 5) ont une profondeur supérieure à 5 mm.

7. Pneu selon l'une quelconque des revendications précédentes, **caractérisé en ce que** lesdites deuxièmes rainures circonférentielles (3, 4) définissent dans la partie centrale (L1) deux rangées de blocs centraux (9 ; 11), positionnées chacune latéralement par rapport à la nervure centrale (10), chaque rangée centrale de blocs (9, 11) ayant une pluralité de lamelles (21).

8. Pneu selon l'une quelconque des revendications précédentes, **caractérisé en ce que** chaque rangée de blocs centraux (9 ; 11) comprend une pluralité de blocs centraux (13 ; 14) et une pluralité de rainures essentiellement transversales (15, 16) qui définissent lesdits blocs centraux (13 ; 14) de manière circonférentielle, lesdites rainures essentiellement transversales (15, 16) s'étendant sur au moins 50% de la largeur de ladite rangée centrale de blocs (9 ; 11).

9. Pneu selon la revendication 8, **caractérisé en ce que** les rainures essentiellement transversales (15 ; 16) ont une largeur variable le long de leurs extensions, avec une section transversale décroissante en direction de ladite nervure centrale (10).

10. Pneu selon l'une quelconque des revendications précédentes, **caractérisé en ce que** les rainures essentiellement transversales (15 ; 16) ont une largeur inférieure à 10 mm.

11. Pneu selon l'une quelconque des revendications précédentes 8 à 10, **caractérisé en ce que** chaque bloc central (13 ; 14) de la rangée de blocs centraux (9 ; 11) est axialement délimité par une partie (103 ; 106) d'une première rainure circonférentielle (3, 6) et par une partie (104 ; 105) d'une deuxième rainure circonférentielle (4 ; 5) et dans une direction circonférentielle par deux rainures essentiellement transversales (15 ; 16).

12. Pneu selon l'une quelconque des revendications précédentes 8 à 11, **caractérisé en ce que** lesdits blocs (13 ; 14) ont des bords arrondis.

13. Pneu selon l'une quelconque des revendications précédentes, **caractérisé en ce que** chaque partie d'épaulement comprend au moins une rangée de blocs latéraux (8, 12) comprenant une pluralité de blocs d'épaulement (23, 24) et une pluralité de rainures essentiellement transversales (56 ; 66), chaque rangée de blocs d'épaulement (8 ; 12) comprenant une pluralité de lamelles (22) .

14. Pneu selon la revendication 13, **caractérisé en ce que** chaque bloc d'épaulement (23, 24) est délimité de manière circonférentielle par deux rainures essentiellement transversales (56 ; 66) et axialement par une partie d'une première rainure circonférentielle.

15. Pneu selon la revendication 13 ou 14, **caractérisé en ce que** lesdites rainures essentiellement transversales (56 ; 66) s'étendent sur au moins 50% de la largeur de ladite rangée de blocs (8 ; 12).

16. Pneu selon l'une quelconque des revendications 13 à 15, **caractérisé en ce que** lesdits blocs d'épaulement (23, 24) ont des bords arrondis.

17. Pneu selon les revendications 12 et 16, **caractérisé en ce que** les bords arrondis desdits blocs centraux (13 ; 14), conjointement avec les bords arrondis des blocs d'épaulement (23 ; 24), créent des parties de la première rainure circonférentielle (3 ; 4) avec une plus large section transversale aux intersections entre les premières rainures circonférentielles (3 ; 4) et les rainures essentiellement transversales (56 ; 16 ; 66, 15).

18. Pneu selon l'une quelconque des revendications précédentes, **caractérisé en ce que** lesdites lamelles (20 ; 21 ; 22) ont un motif ondulé, lesdites lamelles (20 ; 21 ; 22) ayant de préférence un motif sinusoïdal.

19. Pneu selon l'une quelconque des revendications 7 et 13, **caractérisé en ce que** lesdites lamelles (21 ; 22) s'étendent dans lesdits blocs (13 ; 14 ; 23 ; 24) définissant une direction essentiellement opposée à l'inclinaison des rainures (15 ; 16 ; 56 ; 66) délimitant les blocs qui les contiennent (14 ; 15).
